# EUROPEAN PATENT APPLICATION

(11) **EP 4 187 805 A1**
(43) Date of publication of application: **31.05.2023**
(21) Application number: 21210794.0
(22) Date of filing: 26.11.2021
(51) Int. Cl.: H04B 7/06, H04W 4/46, H04W 4/02

(54) **METHOD FOR USER EQUIPMENT FOR INCREASING A SIGNAL STRENGTH, METHOD FOR COMMUNICATION DEVICE, APPARATUS, VEHICLE AND COMPUTER PROGRAM**

(71) Applicant: Volkswagen Aktiengesellschaft, 38440 Wolfsburg (DE); Seat, S.A., 08760 Martorell (ES)
(72) Inventor: PFADLER, Andreas, 13357 Berlin (DE); MONTERO BAYO, Luca, 08028 Barcelona (ES)
(74) Representative: 2SPL Patentanwälte PartG mbB

(57) **Abstract**

Embodiments relate to a method 100 for user equipment 310a, 310b. The method 100 for increasing a signal strength of a radio signal from the user equipment 310a, 310b at a receiving communication device 320a, 320b comprises determining 110 an attenuation characteristic of a line-of-sight communication channel 330a, 330b between the user equipment 310a, 310b and the receiving communication device 320a, 320b. Further, the method 100 comprises adjusting 120 an antenna radiation pattern D₁, D₂ of the user equipment 310a, 310b based on the attenuation characteristic of the line-of-sight communication channel 330a, 330b for increasing the signal strength.

## Description

The present disclosure relates to the field of wireless communication. Embodiments relate to a method for user equipment for increasing a signal strength, a method for a communication device, an apparatus, a vehicle and a computer program, more particularly, but not exclusively, to a concept for increasing a signal strength of a radio signal from the user equipment, e.g., to improve a reception at a receiving communication device.

The development of 5G has brought increased attention to the automotive industry as a vertical manufacturer expected to leverage the most advanced features of the new generation of wireless communications. Among the main novelties of 5G, a wide range of spectrum possibilities (currently licensed up to the 28 GHz band - the first-ever Millimeter wave band for mobile use), enhanced support for high mobility scenarios and new mechanisms to guarantee and predict the experienced Quality of Service (QoS), have been established as key functions to support an increasingly connected transportation ecosystem. Besides, the latest standard release (Rel. 16) has given support to Vehicle-to-Everything (V2X) communications with New Radio (NR) technology, allegedly allowing vehicles to make use of the same spectrum options, even for Vehicle-to-Vehicle (V2V) use cases.

Providing the NR support of V2X, vehicles are also capable of communicating at frequencies above 6 GHz. In 5G, these higher frequency bands are allocated at the mmWave range of the spectrum (30-300GHz). The use of higher frequency bands in communications implies propagating in a harsher channel, where the free-space path loss scales with (*f*²), and shading by obstacles and atmospheric effects (e.g., water vapor and oxygen absorption, or rain) take a non-negligible role. Services relying on higher frequency systems, with their inherently high channel-induced attenuation, might find challenging to deliver satisfactory QoS in some situations where signal power attenuation is increased, lowering the received Signal-to-Noise Ratio. As a result, 5G User Equipment (UE) is reliant on multi-antenna front ends to perform beamforming and focus the radiate power towards the intended transmitter/receiver. It is thus worth considering that vehicles may be equipped with an advanced multi-antenna system.

WO 2020 / 178 124 A1 reveals a method for a first vehicle in a mobile communication system for controlling a radio link to a second vehicle. The method comprises setting up a radio link to the second vehicle, determining information related to relative movement between an antenna of the first vehicle and an antenna of the second vehicle based on sensor data of the first vehicle. Further, the method comprises adjusting a beam pattern of the antenna of the first vehicle based on the information related to relative movement to control the radio link.

WO 2021 / 089 662 A1 reveals a device configured for operating in a wireless communication network. The device is further configured for forming an antenna radiation pattern for communicating with a communication partner. The antenna radiation pattern comprises a main lobe and side lobes. The device is configured for controlling the main lobe towards a path to the communication partner and to control the side lobes to address interference at the location of a further device.

US 10 327 155 B2 reveals an electronic apparatus in a wireless communication system. The electronic apparatus comprises processing circuitry configured to train a beam adjustment model for adaptive beamforming with training data, so that the beam adjustment model outputs, for any movement path of a user equipment, beam information, which enables a beam adjustment time interval meeting a performance requirement of the user equipment to be optimized . The beam adjustment model is trained by taking the beam adjustment time interval as an optimization target, and adaptive beamforming is performed using the trained beam adjustment model, so that it is possible to significantly reduce system overhead and measurement and processing overhead for beam adjustment, while ensuring communication performance of the user equipment.

Considering the trade-off between an antenna beam set (e.g., a beam width) and a higher update rate (e.g., depending on a user velocity and relative angle) and in addition the required Line-of-Sight (LOS) condition at higher frequencies it may be a challenging task to determine the antenna beam set at mmWave bands or for highly directive antennas such that LOS between different communication nodes may exist.

Furthermore, targeting to avoid other objects to interfere the LOS condition, leading to None-Line-of-Sight (NLOS) or Obstructed-Line-of-Sight (OLOS) has to be considered. All this effect has to be considered to assure that enough power (e.g., a minimal signal strength) is transmitted in the direct path (e.g., a line-of-sight communication channel) by the determined antenna beam set, e.g., the adjusted antenna radiation pattern. Thus, there may be a need to increase a signal strength of a radio signal, especially at high frequency bands and/or OLOS.

It is therefore a finding that adjusting an antenna radiation pattern of user equipment based on an attenuation characteristic of a line-of-sight communication channel may allow the user equipment to increase a signal strength at a receiving communication device. This way, an antenna radiation pattern ca be adjusted considering the attenuation characteristic, which may increase a communication between the user equipment and a communication device, since a signal strength can be increased.

Examples provide a method for user equipment for increasing a signal strength of a radio signal from the user equipment at a receiving communication device. The method comprises determining an attenuation characteristic of a line-of-sight communication channel between the user equipment and the receiving communication device and adjusting an antenna radiation pattern of the user equipment based on the attenuation characteristic of the line-of-sight communication channel for increasing the signal strength. Thus, the signal strength can be increased by adjusting the antenna radiation pattern (e.g., a beam width, an angle of departure, etc.) to compensate for the attenuation characteristic of the line-of-sight communication channel. This way, a communication between the user equipment and the communication device can be increased.

In an example, the method may further comprise obtaining information about an environment of the user equipment and determining an environmental model. Moreover, determining the attenuation characteristic of the line-of-sight communication channel may be further based on the environmental model. This way, the environment of the user equipment can be utilized to determine the attenuation characteristic, which may improve the determination of the attenuation characteristic. Thus, increasing the signal strength can be more reliable.

In an example, the information about the environment may be obtained by determining information about the environment using one or more sensors of the user equipment and/or receiving information about the environment. Thus, the environmental model can be generated based on sensor data of the UE or received data, e.g., map data received from a third party.

In an example, the information about the environment may comprise dynamic information. Further, the environmental model may be a predicted environmental model. This way, a predicted attenuation characteristic of the line-of-sight communication channel can be determined. Thus, a usage time of the antenna radiation pattern ca be determined, for example.

In an example, adjusting of the antenna radiation pattern may comprise adjusting an angle of departure of a beam of the antenna radiation pattern. This way, the beam of the antenna radiation pattern can be adjusted such that the beam of the antenna radiation pattern can pass an obstacle.

In an example, adjusting of the antenna radiation pattern may comprise adjusting a beam width of a beam of the antenna radiation pattern. This way, the beam width of the antenna radiation pattern can be adjusted such that an increased energy density of the beam of the antenna radiation pattern can pass an obstacle.

In an example, the method may further comprise determining a radiopaque area of the line-of-sight communication channel based on the environmental model and if the radiopaque area exceeds a threshold adjusting the antenna radiation pattern to increase the signal strength of the radio signal at the receiving communication device based on the radiopaque area or terminating a transmission of the radio signal. This way, the communication between the user equipment and the communication device can either be increased by increasing the signal strength or terminated if sufficient signal strength cannot be achieved.

In an example, the method may further comprise determining a usage time for the antenna radiation pattern based on the predicted environmental model. This way, an effort to determine the attenuation characteristic and/or a data traffic for communicating an attenuation characteristic of the line-of-sight communication channel can be reduced.

In an example, the dynamic information may be information about a movement speed of the user equipment, an obstacle in the environment and/or the communication device. This way, the antenna radiation pattern can be adjusted and/or the attenuation characteristic can be determined in an improved way, e.g., based on a movement speed of a mobile obstacle.

In an example, the dynamic information may be information about a planned route of the user equipment, an obstacle in the environment and/or the communication device. This way, the antenna radiation pattern can be adjusted and/or the attenuation characteristic can be determined in an improved way, e.g., based on a desired movement speed of a mobile obstacle.

In an example, the method may further comprise adjusting a transmission parameter based on the adjusted antenna radiation pattern. This way, a communication between the user equipment and the communication device can be adjusted, e.g., to a desired service.

In an example, the method may further comprise generating a communication zone message comprising information about the attenuation characteristic of the line-of-sight communication channel and transmitting the communication zone message to the communication device. This way, the communication device can be informed about the attenuation characteristic of the line-of-sight communication channel without a need to determine this information.

Examples relate to method for a communication device for increasing a signal strength of a radio signal transmitted by the communication device to user equipment. The method comprises receiving a communication zone message comprising information about an attenuation characteristic of a line-of-sight communication channel between the communication device and the user equipment and adjusting an antenna radiation pattern of the communication device based on the attenuation characteristic of the line-of-sight communication channel for increasing the signal strength. This way, the communication device can be informed about the attenuation characteristic of the line-of-sight communication channel without a need to determine this information.

Examples further provide an apparatus, comprising one or more interfaces configured to communicate with a communication device or user equipment. The apparatus further comprises processing circuitry configured to control the one or more interfaces and to perform the method for user equipment and/or a communication device described above.

Examples further provide a vehicle comprising the apparatus as described above.

Examples further relate to a computer program having a program code for performing the method described above, when the computer program is executed on a computer, a processor, or a programmable hardware component.

Some examples of apparatuses and/or methods will be described in the following by way of example only, and with reference to the accompanying figures, in which
Fig. 1 shows an example of a method for user equipment;
Fig. 2 shows an example of a method for a communication device;
Fig. 3 shows different examples of a communication between a user equipment and a communication device using a line-of-sight communication channel;
Fig. 4 shows an example of different antenna radiation pattern; and
Fig. 5 shows a block diagram of an apparatus.

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, e.g., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

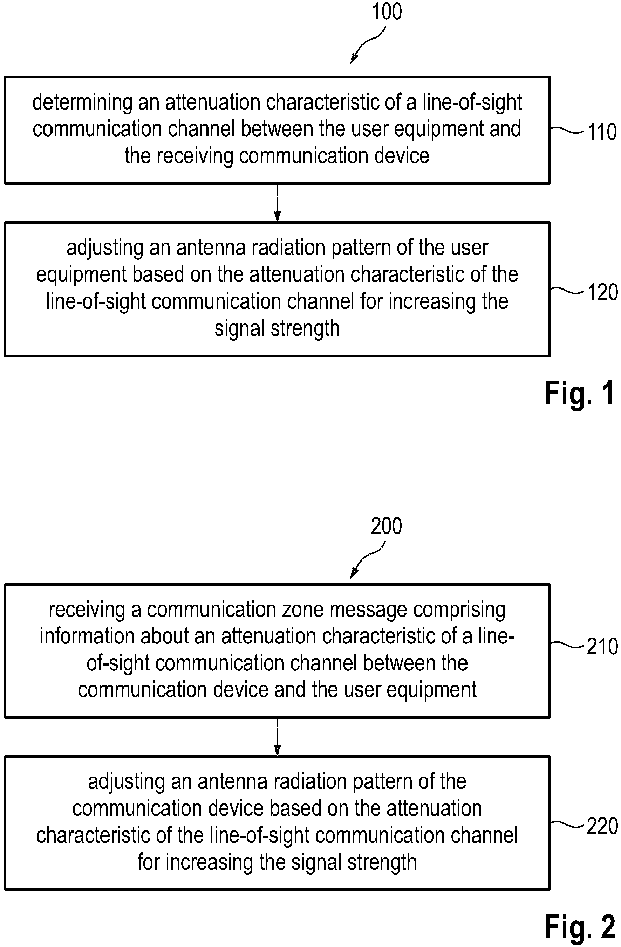

Fig. 1 shows an example of a method 100 for user equipment. The method 100 for increasing a signal strength of a radio signal from the user equipment at a receiving communication device comprises determining 110 an attenuation characteristic of a line-of-sight communication channel between the user equipment and the receiving communication device. Further, the method 100 comprises adjusting 120 an antenna radiation pattern of the user equipment based on the attenuation characteristic of the line-of-sight communication channel for increasing the signal strength. Thus, the antenna radiation pattern can be adjusted corresponding to the attenuation characteristic of the line-of-sight communication, e.g., an angel of departure of a beam, a beam width, etc. can be adjusted to increase a signal strength, which may improve a communication between the user equipment and the communication device.

The UE may communicate in a mobile communication system with the communication device, e.g., a base station, another UE, a vehicle. For example, the UE and the communication device may communicate in/via a mobile communication system. The mobile communication system may comprise a plurality of transmission points and/or base stations operable to communicate radio signals with the UE. In an example, the mobile communication system may comprise the UE and the communication device.

A communication device, e.g., the communication device, can be located in the fixed or stationary part of the network or system. A communication device may correspond to a remote radio head, a transmission point, an access point, a macro cell, a small cell, a micro cell, a pico cell, a femto cell, a metro cell etc. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A communication device can be a wireless interface of a wired network, which enables transmission and reception of radio signals to a UE, such as a UE, or UE. Such a radio signal may comply with radio signals as, for example, standardized by 3GPP or, generally, in line with one or more of the above listed systems. Thus, a communication device may correspond to a NodeB, an eNodeB, a BTS, an access point, etc.

The mobile communication system may be cellular. The term cell refers to a coverage area of radio services provided by a transmission point, a remote unit, a remote head, a remote radio head, communication device, UE or a NodeB, an eNodeB, respectively. The terms cell and base station may be used synonymously. A wireless communication device, e.g., the UE, can be registered or associated with at least one cell (e.g., the communication device), e.g., it can be associated to a cell such that data can be exchanged between the network and the mobile in the coverage area of the associated cell using a dedicated channel, connection or connection.

In general, the UE/communication device is a device that is capable of communicating wirelessly. In particular, however, the UE may be a mobile UE, e.g., a UE that is suitable for being carried around by a user. For example, the UE may be a User Terminal (UT) or User Equipment (UE) within the meaning of the respective communication standards being used for mobile communication. For example, the UE may be a mobile phone, such as a smartphone, or another type of mobile communication device, such as a smartwatch, a laptop computer, a tablet computer, or autonomous augmented-reality glasses. For example, the UE and the communication device may be configured to communicate in a cellular mobile communication system/ cellular mobile communication system. Accordingly the UE and the communication device may be configured to communicate in a cellular mobile communication system, for example in a Sub-6GHz-based cellular mobile communication system (covering frequency bands between 500 MHz and 6 GHz) or in a mmWave-based cellular mobile communication system (covering frequency bands between 20 GHz and 60 GHz). In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

In addition the UE/communication device may be suitable for, or configured to, communicating/communicate via non-cellular communication systems, e.g., via a device-to-device vehicular communication system, e.g., according to the IEEE 802.11p standard (Institute of Electrical and Electronics Engineers standard 802.11p for vehicular communication) or via a wireless local area network (e.g., according to IEEE 802.11a, IEEE 802.11b, IEEE 802.11g, IEEE 802.11n, IEEE 802.11ac or IEEE 802.11ax, also known as Wi-Fi 1 through Wi-Fi 6(E)). In particular, the UE and the communication device may be suitable for, or configured to, communicating/communicate in the frequency band between 5 GHz and 7.1 GHz, which covers communication in the 5 GHz band (for WiFi in the 5 GHz band), 5.9 GHz band (for vehicular communication according to the 802.11p standard) and between 5.9 GHz and 7.1 GHz (for WiFi in the 6 GHz band).

A connection between the UE and the communication device may be a wireless connection, e.g., a mmWave-based connection over the mobile communication system (e.g., using carrier frequencies of at least 20 GHz) or may be performed at lower carrier frequencies, e.g., using carrier frequencies of at most 7.5 GHz. For example, the wireless connection between the UE and the communication device may be initiated using the protocols of the mobile communication system, or using a short-range communication system, such as via a wireless local area network outlined above.

As is evident from the above example, while the communication between UE and communication device occurs via the mobile communication system, additional communication and/or alternatively communication (e.g., the communication device may be a vehicle) between the UE and the communication device may occur via a vehicular communication system. Such communication may be carried out directly, e.g., by means of Device-to-Device (D2D) communication. Such communication may be carried out using the specifications of the vehicular communication system. An example of D2D is direct communication between vehicles, also referred to as Vehicle-to-Vehicle communication (V2V) or Vehicle-to-Everything (V2X), car-to-car, Dedicated Short Range Communication (DSRC), respectively. Technologies enabling such D2D-communication include 802.11p, 3GPP systems (4G, 5G, NR and beyond), etc.

Determining 110 an attenuation characteristic of a line-of-sight communication channel can be performed by processing circuitry of the UE. The line-of-sight communication channel may be given by a LOS area in which the antenna radiation pattern is transmitted. For example, the antenna radiation pattern may be given by the LOS area in which a beam with defined parameters, such like a beam width, an angel of departure, etc. is transmitted. For example, the line-of-sight communication channel may be defined by a minimum radiation density in an area caused by the antenna radiation pattern. Thus, the LOS area may be the area in space in which the minimal radiation density is exceeded by the antenna radiation pattern. If the radiation density caused by the antenna radiation pattern is below a threshold in an area, this area may be considered as not belonging to the line-of-sight communication channel, e.g., this area may be a part of a non-line-of-sight (NLOS) area (which surrounds the LOS area).

The LOS area or the LOS communication channel does not necessarily have a LOS condition between the UE and the communication device. For example, a direct LOS path between the UE and the communication device may be blocked, e.g., by an obstacle. But a communication using the LOS communication channel may be still possible between the UE and the communication device, even if there is no direct LOS path. For example, a signal strength at the receiving communication device may be still sufficient to enable a reliable communication between the communication device and the UE even if the LOS path is blocked, e.g., by an obstacle.

The attenuation characteristic may depend on a reflected/transmitted radiation. The attenuation characteristic may be determined based on an obstacle inside of the LOS communication channel. For example, if a sub-region inside the LOS communication channel may reflect (including absorbing) completely the radiation, the sub-region comprises a radiopaque obstacle, an attenuation may be 100% for this sub-region which defines the attenuation characteristic for this region. For example, the attenuation for an undisturbed (radio) signal between the UE and the communication device, e.g., on the LOS path, may be 0%. For example, if the radiation from the UE is only partially blocked, e.g., by a radiolucent obstacle the attenuation for the sub-region comprising the radiolucent structure may be between 0% and 100%.

The attenuation characteristic may further depend on an obstacle in the NLOS area (the surrounding of the LOS communication channel). For example, as in every wave-propagated transmission between a transmitter and receiver, some amount of the radiated wave propagates off-axis (not on the LOS path between transmitter and receiver) and only partially in the LOS communication channel. Thus, signals deflected in the NLOS area may also be radiated to the communication device, which may increase the attenuation, e.g., by destructive superposition.

In principle an obstacle, can be any object in the line-of-sight between the UE and the communication device and/or any object in a location that cause non-negligible change in the electromagnetic field at the UE or the (receiving) communication device.

Adjusting 120 an antenna radiation pattern may be performed by adjusting an antenna system parameter. For example, for adjusting 120 the antenna radiation pattern the antenna system parameter may be determined by a processing unit of the UE by calculating and/or loading data. The processing unit may calculate the antenna system parameter to adjust the antenna system based on the attenuation characteristic, for example. For example, the processing unit may load data about the at least one antenna system parameter, e.g., from a data storage media, e.g., by use of a databank, a look-up table, etc. The antenna system parameter may be a beam width, an angle of departure, a signal intensity, a duration of a used antenna radiation pattern, etc.

In an example, the method may further comprise obtaining information about an environment of the user equipment and determining an environmental model. Moreover, determining the attenuation characteristic of the line-of-sight communication channel may be further based on the environmental model. This way, the determination of the attenuation characteristic of the LOS communication channel can be improved.

Obtaining the information about the environment can be done at least partially in advance, e.g., by downloading/loading a map. Thus, the environment for a defined position may be given by the map. For example, the UE may download a map of a downtown area and may combine position data determined by the UE (e.g., using global positioning system, GPS) and/or provided by the user with the map to determine an environment of the UE. Optionally or alternatively, the UE may obtain the information about the environment in real-time, e.g., by a measurement or receive real-time measurement data. Optionally or alternatively, the UE may receive the (real-time) information about the environment by another UE, e.g., the communication device, in the environment of the UE.

In an example, the information about the environment may be obtained by determining information about the environment using one or more sensors of the user equipment and/or by receiving information about the environment. For example, the information about the environment may be received from a communication device of the communication system, e.g., from the communication device, a vehicle, an infrastructure, a smartphone, a base station etc. For example, the one or more sensors may belong to a wide variety of UE sensors, e.g. a radar sensor, a lidar sensor, automotive radar, ultrasound sensor or a vision-related sensor such as camera or infrared sensors.

In an example, the information about the environment comprises dynamic information and the environmental model may be a predicted environmental model. The information about the environment can be rather static, e.g., determined by a map considering immobile obstacles (e.g., infrastructure like house, traffic light etc.) and/or rather (or fully) dynamic, e.g., determined by sensor data considering, e.g., movement speeds of mobile obstacles (e.g. vehicles, pedestrian, cyclist etc.) in the environment. For example, the predicted environmental model may solely depend on a (predicted) movement speed of the UE (e.g., based on a planned route) and static information about the environment (e.g., determined by a map). Thus, the predicted environmental model may be generated with less computational resources and without a need of further sensors. This may be advantageously in an environment with low density of obstacles, e.g., an open landscape, resulting in an eased determination of the predicted channel dynamic.

For example, measurement data of the one or more sensors may be combined with received information about the environment. For example, the received information may provide information about immobile obstacles and the measurement data may provide information about mobile obstacles. Thus, a determination using one or more sensors may be eased (since solely mobile obstacles may be needed to be determined) and/or an effort using the one or more sensors may be decreased. Optionally or alternatively, the data of the immobile obstacles may be used to verify determined immobile obstacles using the one or more sensors or vice versa.

For example, the UE may be equipped with techniques that can interpret Cooperative Perception data (such as Cooperative Perception Messages (CPM)) received from other road agents (other vehicles, pedestrians, infrastructure, back-end applications), which may be frequently updated in a periodical or event-triggered fashion. Further, the UE may be capable of fusing the data obtained with its sensing device (the one or more sensors) and the data received (e.g., received via CPM) to build the (predicted) environmental model.

The UE may be further capable of performing predictions on the environmental model based on e.g. intention data received from other road agents (e.g., a planned route of another vehicle), generating a predictive environmental model. Further, the UE may use the predicted environmental model (and optionally the environmental model) to generate the predicted environmental model, e.g. by extrapolating current data of a mobile obstacle in the environment. The UE may be able to provide information about the predicted environmental model, e.g., the attenuation characteristic derived from the predicted environmental model to the communication device, e.g., to a base station, e.g., by use of a communication zone message. Thus, the base station may be enabled to adjust its antenna system to generate an improved antenna radiation pattern for communicating with the UE.

For example, the UE may predict a visibility state between the UE and the communication device, e.g., a LOS path, a vehicle-blocked LOS path, a building-blocked LOS path, etc. based on the predicted environmental model. The LOS path may have a lower attenuation (e.g., 0%) than the vehicle-blocked LOS path, and the latter may have a lower attenuation than the building-blocked LOS path. Further, the UE may predict a duration of the LOS path, the vehicle-blocked LOS path, the building-blocked LOS path, etc.

In an example, adjusting of the antenna radiation pattern may comprise adjusting an angle of departure of a beam of the antenna radiation pattern. This way, if beamforming is used the beam can be transmitted towards a desired direction, e.g., a direction with a lower attenuation. For example, a sub-region of the LOS communication channel may be blocked by a radiopaque obstacle. Thus, by adjusting the angle of departure the antenna radiation pattern may be adjusted in a way that a signal intensity transmitted towards the sub-region comprising the radiopaque obstacle is decreased and in the rest of the LOS communication channel (excluding the sub-region with the radiopaque obstacle) the signal intensity is increased, which may lead to an improved signal intensity at the receiving communication device.

In an example, adjusting of the antenna radiation pattern may comprise adjusting a beam width of a beam of the antenna radiation pattern. This way, the signal intensity at the receiving communication device may be increased by reducing the impact of a (radiopaque) obstacle. For example, if the beam width is increased, a dimension of the LOS communication channel may be increased and thus an impact of the (radiopaque) obstacle may be reduced, since the (radiopaque) obstacle may occupy a smaller portion of the LOS communication channel. For example, the adjusting of the antenna radiation pattern may be performed by adjusting the beam width.

In an example, the method may further comprise determining a radiopaque area of the line-of-sight communication channel based on the environmental model and if the radiopaque area exceeds a threshold adjusting the antenna radiation pattern to increase the signal strength of the radio signal at the receiving communication device based on the radiopaque area or terminating a transmission of the radio signal. The radiopaque area (e.g., a sub-region of the LOS area) may comprise a radiopaque obstacle capable of blocking the radiation transmitted by the UE from the receiving communication device. For example, the threshold may be any desired value e.g., 10%, 20%, 30 %, etc. of the LOS area and if the radiopaque area exceeds the threshold, a communication between the UE and the communication device may be impossible. For example, if a the radiopaque has the same dimension as the LOS area (e.g., the obstacle extends vertically through the whole LOS communication channel) the transmission of the radio signal may be transmitted, since no communication may be possible. For example, if the radiopaque area occupies only a part of the LOS area a communication may still be possible and the signal intensity can be increased by e.g., adjusting the angle of departure of the beam, the beam width, the signal intensity, etc.

In an example, the method may further comprise determining a usage time for the antenna radiation pattern based on the predicted environmental model. This way, an adjustment of the antenna radiation pattern can be scheduled, which may reduce computational for determining the antenna system parameter.

In an example, the dynamic information may be information about a movement speed of the user equipment, an obstacle in the environment and/or the communication device. In an example, the dynamic information may be information about a planned route of the user equipment, an obstacle in the environment and/or the communication device. For example, the radiopaque area and/or the impact of the radiopaque area may be determined in an improved way. The impact of the radiopaque area on the signal intensity received by the communication device may depend on a position of the radiopaque area in the LOS communication channel. For example, if the radiopaque area is positioned directly in the LOS path of the LOS communication channel, the signal intensity received by the communication device may be decreased in comparison to a position besides the LOS path.

In an example, the method may further comprise adjusting a transmission parameter based on the adjusted antenna radiation pattern.

The transmission parameter may define/result in a variation of a channel strength over time and/or over frequency. For example, a choice of the transmission parameter of the radio channel may depend on large-scale fading effects and/or on small-scale fading effects. For example, the choice of the transmission parameter of the antenna radiation pattern may depend on a coherence time (respectively a Doppler spread), a frequency coherence (respectively a Doppler spread or coherence bandwidth), a noise of the LOS communication channel, an attenuation of the LOS communication channel, a coverage of the UE (and respectively of the communication device).

The transmission parameter may depend on a communication parameter. For example, a transmission parameter can be achieved by selecting an appropriate communication parameter. For example, a communication parameter may be a spatial angle, a spatial domain, a transmission power, a beam form, a chosen antenna of a plurality of antennas for beamforming or a repetition rate of a CSI report. Thus, by determining a communication parameter a transmission parameter for communication between the UE and the communication device may be improved.

In an example, the method may further comprise generating a communication zone message comprising information about the attenuation characteristic of the line-of-sight communication channel and transmitting the communication zone message to the communication device. This way, the communication device can be enabled to determine its antenna radiation pattern based on the attenuation characteristic of the LOS communication zone without a need for determining the required information.

The communication zone message may be transmitted by any suitable message, e.g., by a broadcast message, groupcast message or unicast message. Thus, the information about the attenuation characteristic of the LOS communication channel can be transmitted in a desired way, e.g., using a broadcast message to transmit the communication zone message to the communication device.

Further, the UE may periodically or non-periodically broadcast the generated communication zone message. Thus, the communication device may be enabled to use the generated communication zone message. Also the communication device may perform an adjustment of its antenna radiation pattern based on the communication zone message.

For example, if the UE and the communication device may be a vehicle the communication zone message may be broadcasted via sub-6GHz V2X bands to extend the spread of the data.

The V2X communication, e.g., between the UE and the communication device may be Wireless Local Area Network (WLAN) technology and works directly between vehicle and vehicle (V2V) and/or traffic infrastructure (V2I), which form a vehicular ad-hoc network as two V2X senders come within each other's range. Messages like Cooperative Awareness Messages (CAM) or Basic Safety Message (BSM), and Decentralized Environmental Notification Messages (DENM) may be used for communication between the vehicles. Other roadside infrastructure related messages are Signal Phase and Timing Message (SPAT), in Vehicle Information Message (IVI), and Service Request Message (SRM).

The communication that occurs before connection establishment, and that may be used to obtain said information, may be based on broadcasts of the UE, e.g., via the mobile communication system. Accordingly, the UE may be suitable for, or configured to, communicate in/via the communication device. For example, the UE, and in particular the communication device may be configured to communicate via one or more antennas via the mobile communication system. Additionally, the UE, and the communication device, may be configured to communicate via short-range communication, e.g., via a wireless local area network according to a variant of the IEEE 802.11 standard, via Bluetooth or via UWB.

To perform the method 100 a vehicle may comprise the user equipment. The vehicle may be equipped with a connectivity system (CS) to deal with V2X communications. This CS is equipped with an antenna system (AS) with one or more panels, each facing different radiating directions and composed of one or more antenna elements, fed by a digitally controlled analog feeding network.

For example, the vehicle may obtain the predicted environmental model by receiving from other V2X nodes, e.g., the communication device, customary V2X messaging (e.g., cooperate awareness message, decentralized environmental notification message, collective perception message), use of sensor data (e.g., radar, lidar, cameras), etc.

More details and aspects are mentioned in connection with the embodiments described above and/or below. The example shown in Fig. 1 may comprise one or more optional additional features corresponding to one or more aspects mentioned in connection with the proposed concept or one or more examples described below (e.g., Fig. 2 - 5).

Fig. 2 shows an example of a method 200 for a communication device. The method 200 for increasing a signal strength of a radio signal transmitted by the communication device to user equipment comprises receiving 210 a communication zone message comprising information about an attenuation characteristic of a line-of-sight communication channel between the communication device and the user equipment. Further, the method 200 comprises adjusting 220 an antenna radiation pattern of the communication device based on the attenuation characteristic of the line-of-sight communication channel for increasing the signal strength. The communication device may be a counterpart to the UE as described with reference to Fig. 1.

The communication zone message may be received by any suitable message, e.g., by a broadcast message, groupcast message or unicast message. Thus, the information about the attenuation characteristic of the LOS communication channel can be received in a desired way, e.g., using a broadcast message to receive the communication to the communication device.

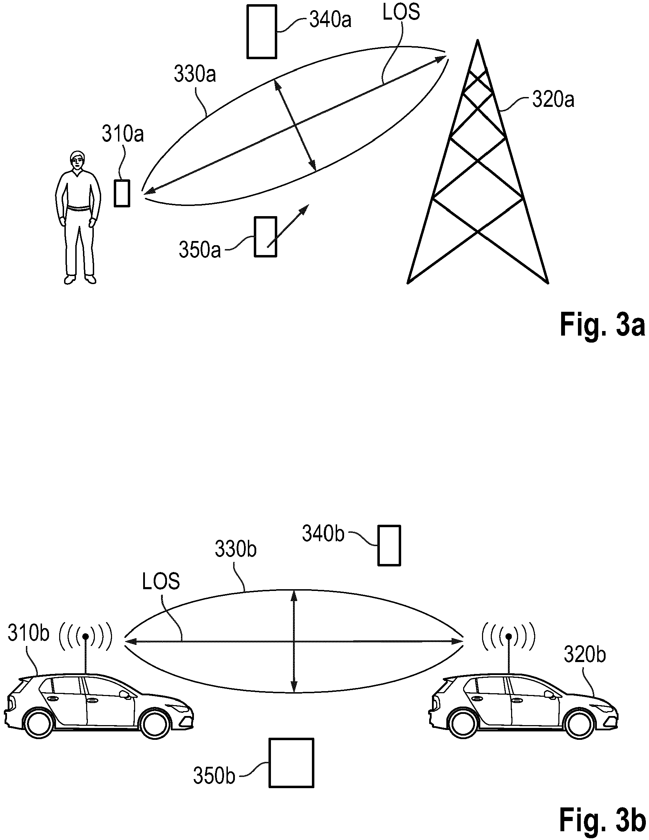

More details and aspects are mentioned in connection with the embodiments described above and/or below. The example shown in Fig. 2 may comprise one or more optional additional features corresponding to one or more aspects mentioned in connection with the proposed concept or one or more examples described above (Fig. 1) and/or below (e.g., Fig. 3 - 5).

Fig. 3 shows different examples of a communication between a user equipment 310a, 310b and a communication device 320a, 320b using a line-of-sight communication channel 330a, 330b. The UE 310a, 310b can be the UE described with reference to Fig. 1 and the communication device 320a, 320b can be the communication device as described with reference to Fig. 2.

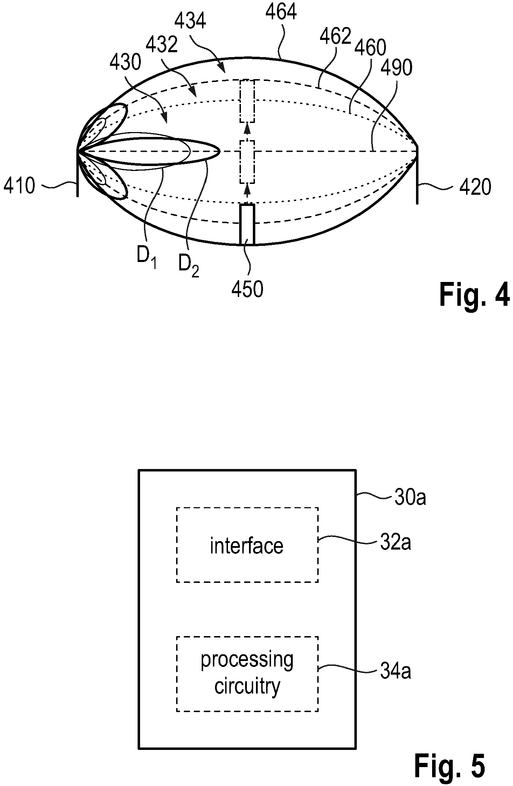

As can be seen in Fig. 3a the UE 310a may be a mobile UE 310a, e.g., a smartphone 310a and the communication device 320a may be a base station 320a. Between the UE 310a and the communication device may be a LOS communication channel 330a. For example, the area between the UE 310a and the communication device 320a may be differentiated between LOS area (see Fig. 3a and Fig. 3b), OLOS area, (LOS communication channel with partial obstruction, e.g., a radiopaque obstacle is positioned in the LOS communication channel, see Fig. 4) and NLOS area.

The obstacle 340a may be in the NLOS area and thus may have a neglectable influence on the signal intensity at the receiving communication device 320a. The mobile obstacle 350a may be in the NLOS area but may be moving in the direction of the LOS communication channel.

The mobile UE 310 may obtain information about the environment by observing with a sensor, e.g., a camera, a LIDAR, a radar etc., the area between the UE 310a and the communication device 320a. Hence the UE 310a may determine (or may receive via any suitable message) the distance between the UE 310a and the communication device 320a. Furthermore, the UE may identify importance of an obstacle/object by determining the respective areas (LOS area, LOS area partially blocked, NLOS area) and the position of the obstacle/object. Further, the UE 310a may know the height of both antenna systems (of its own and of the communication device 320a) and a used transmission frequency.

The UE 310a may predict the environment, the distance to the communication device 320a and/or a movement of obstacles which potentially interfere with the LOS area by entering the LOS area from the NLOS area (changing the LOS area to a LOS area partially blocked) or which are already inside of the LOS area (existing LOS area partially blocked).

Additionally, considering the movement and/or a trajectory of the UE 310a and/or of the communication device 320a potential interfering obstacles can be determined in an improved way. Further, a map information such like a road curve can be considered for identifying potential interfering obstacles. The UE 310a may use the information about the environment, the distance to the communication device 320a and/or a movement of obstacles which potentially interfere to generate a predicted environmental model.

For adjusting the antenna radiation pattern the UE 310a may extend the radio channel condition to the LOS communication channel, considering the not omnidirectional antenna but different antenna radiation pattern (directivities), corresponding to distinct antenna beam set and hence the power which is amplified towards the communication device 320a. A beam set with the goal to not loss the LOS conditions for a certain time horizon (from the predicted environmental model) and/or to receive a certain signal intensity at the receiving communication device 320a may be determined. Further, a reasonable beam set (e.g., a beam width smaller than the maximal beam width) may be considered as a trade-off between narrow beam width, update rate (a user speed of a user of the mobile 310a), and/or a prediction horizon. Further, the UE 310a may also consider the adjusted/used beam set (e.g., beam width) when selecting a beam update (e.g., a channel estimation, pilot signaling etc.). The selected beam update has to be communicated to the base station 320a.

As can be seen in Fig. 3b the same method can be applied to vehicles. For example, the UE 310b and the communication device 320b may be comprised by a vehicle each. Between the vehicles a LOS communication channel 330b may be formed, which is somehow restricted by the obstacle 340b and the mobile obstacle 350b.

More details and aspects are mentioned in connection with the embodiments described above and/or below. The example shown in Fig. 3 may comprise one or more optional additional features corresponding to one or more aspects mentioned in connection with the proposed concept or one or more examples described above (Fig. 1 - 2) and/or below (e.g., Fig. 3-5).

Fig. 4 shows an example of different antenna radiation pattern. As can be seen in Fig. 4 an antenna beam width may depend on an impact of the environment and/or (mobile) obstacles. The solid line 464 represents a boundary of a NLOS area 434, the dashed line 462 a boundary of a OLOS area 462 and the dotted line 430 a boundary of a LOS area 460.

An obstacle 450 may block a part of the OLOS area 432 and the LOS area may be adjusted to end next to the obstacle 450. For this environmental condition an antenna radiation pattern with a wider beam D₂ (decreased antenna directivity) may be chosen to transmit a significant amount of the signal intensity in the LOS area, since the radiation density in the LOS area is increased by decreasing the radiation density in the OLOS area (and also the NLOS area) in comparison to an antenna radiation pattern with a smaller beam D₁.

The obstacle 450 may be a static obstacle or a mobile obstacle. For example, the mobile obstacle may move towards the LOS path 490 and may block at a certain time the LOS path. For this environmental condition the UE 410 may still use an antenna radiation pattern with the wider beam D₂, since a huge amount of radiation would be blocked for the antenna radiation pattern with smaller beam D₁.

Further, the mobile obstacle may be located above/besides the LOS path 490, e.g., directly on the boundary 460 of the LOS area 430. For this environmental condition the UE 410 may use the antenna radiation pattern with the smaller beam D₁, which may increase the signal intensity at the receiving communication device 420, since the radiation transmitted on the LOS path 490 is for this beam increased.

More details and aspects are mentioned in connection with the embodiments described above and/or below. The example shown in Fig. 4 may comprise one or more optional additional features corresponding to one or more aspects mentioned in connection with the proposed concept or one or more examples described above (Fig. 1 - 3) and/or below (e.g., Fig. 5).

Fig. 5 shows a block diagram of an apparatus 30. The apparatus 30 comprises one or more interfaces 32 configured to communicate with a communication device or user equipment. The apparatus 30 further comprises processing circuitry 34 configured to control the one or more interfaces and to perform the method for a user equipment as described above (e.g., described with reference to Fig.1) or the method for a communication device (e.g., as described with reference to Fig. 2). The apparatus 30 may be comprised by a vehicle. For example, the vehicle may be a land vehicle, such as a road vehicle, a car, an automobile, an off-road vehicle, a motor vehicle, a bus, a robo-taxi, a van, a truck or a lorry. Alternatively, the vehicle may be any other type of vehicle, such as a train, a subway train, a boat or a ship. For example, the proposed concept may be applied to public transportation (trains, bus) and future means of mobility (e.g., robo-taxis).

For example, the apparatus 30 can be the user equipment described with reference to Fig. 1, where the interface is configured to communicate with the communication device described with reference to Fig. 2. Alternatively, the apparatus 30 can be the communication device described with reference to Fig. 2, where the interface 32 is configured to communicate with the user equipment described with reference to Fig. 1.

As shown in Fig. 5 the respective one or more interfaces 32 are coupled to the respective processing circuitry 34 at the apparatus 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface 32, so that any data transfer that occurs over the interface and/or any interaction in which the interface may be involved may be controlled by the processing circuitry 34.

In an embodiment the apparatus 30 may comprise a memory and at least one processing circuitry 34 operably coupled to the memory and configured to perform the below mentioned method.

In examples the one or more interfaces 32 may correspond to any means for obtaining, receiving, transmitting or providing analog or digital signals or information, e.g., any connector, contact, pin, register, input port, output port, conductor, lane, etc. which allows providing or obtaining a signal or information. An interface may be wireless or wireline and it may be configured to communicate, e.g., transmit or receive signals, information with further internal or external components. The one or more interfaces 32 may comprise further components to enable communication between vehicles. Such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

More details and aspects are mentioned in connection with the embodiments described above. The example shown in Fig. 5 may comprise one or more optional additional features corresponding to one or more aspects mentioned in connection with the proposed concept or one or more examples described above (Fig. 1 - 4).

The aspects and features described in relation to a particular one of the previous examples may also be combined with one or more of the further examples to replace an identical or similar feature of that further example or to additionally introduce the features into the further example.

Examples may be compliant to or even comprised in certain standard specifications, such as those specified by the 3GPP. Configuration information may for example be communicated using signaling radio bearers, e.g., by means of Radio Resource Control (RRC) messages, which are, for example, specified in the *.331 series of 3GPP as layer 3 control plane messages. For example, physical layer specification, e.g., by means of Doppler Delay Resolutions and other physical layer specifications may also be affected by present embodiments, e.g., *.201, *.211, *.212, *.213, *.214, *.216 series in the 3GPP specifications.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

### List of reference signs

30 apparatus
32 interface
34 processing circuitry
100 method for user equipment
110 determining an attenuation characteristic
120 adjusting an antenna radiation pattern
200 method for communication device
210 receiving a communication zone message
220 adjusting an antenna radiation pattern
310a, 310b user equipment
320a, 320b communication device
330a, 330b line-of-sight communication channel
340a, 340b static obstacle
350a, 350b mobile obstacle
410 user equipment
420 communication device
430 LOS area
432 OLOS area
434 NLOS area
450 mobile obstacle
460 boundary LOS area
462 boundary OLOS area
464 boundary NLOS area
490 LOS path
D₁, D₂ antenna radiation pattern

## Claims

1. A method (100) for user equipment (310a; 310b; 410) for increasing a signal strength of a radio signal from the user equipment (310a; 310b; 410) at a receiving communication device (320a; 320b), comprising:
determining (110) an attenuation characteristic of a line-of-sight communication channel (330a; 330b; 430) between the user equipment (310a; 310b; 410) and the receiving communication device (320a; 320b; 420); and
adjusting (120) an antenna radiation pattern (D₁; D₂) of the user equipment (310a; 310b; 410) based on the attenuation characteristic of the line-of-sight communication channel (330a; 330b) for increasing the signal strength.

2. The method (100) according to the claim 1, further comprising:
obtaining information about an environment of the user equipment (310a; 310b; 410);
determining an environmental model; and
wherein determining the attenuation characteristic of the line-of-sight communication channel (330a; 330b; 430) is further based on the environmental model.

3. The method (100) according to the claim 2, wherein
the information about the environment comprises dynamic information; and
wherein the environmental model is a predicted environmental model.

4. The method (100) according to any of the preceding claims, wherein
adjusting of the antenna radiation pattern (D₁; D₂) comprises adjusting an angle of departure of a beam of the antenna radiation pattern (D₁; D₂).

5. The method (100) according to any of the preceding claims, wherein
adjusting of the antenna radiation pattern (D₁; D₂) comprises adjusting a beam width of a beam of the antenna radiation pattern (D₁; D₂).

6. The method (100) according to any of the claims 2 - 5, further comprising determining a radiopaque area of the line-of-sight communication channel (330a; 330b; 430) based on the environmental model; and
if the radiopaque area exceeds a threshold adjusting the antenna radiation pattern (D₁; D₂) to increase the signal strength of the radio signal at the receiving communication device (320a; 320b; 420) based on the radiopaque area or terminating a transmission of the radio signal.

7. The method (100) according to any of the claims 3 - 6, further comprising determining a usage time for the antenna radiation pattern (D₁; D₂) based on the predicted environmental model.

8. The method (100) according to any of the claims 3 - 7, wherein
the dynamic information is information about a movement speed of the user equipment (310a; 310b; 410), an obstacle (340; 350; 450) in the environment and/or the communication device (320a; 320b; 420).

9. The method (100) according to any of the claims 3 - 8, wherein
the dynamic information is information about a planned route of the user equipment (310a; 310b; 410), an obstacle (340; 350; 450) in the environment and/or the communication device (320a; 320b; 420).

10. The method (100) according to any of the preceding claims, further comprising adjusting a transmission parameter based on the adjusted antenna radiation pattern (D₁; D₂).

11. The method (100) according to any of the preceding claims, further comprising generating a communication zone message comprising information about the attenuation characteristic of the line-of-sight communication channel (330a; 330b; 430); and transmitting the communication zone message to the communication device (320a; 320b; 420).

12. A method (200) for a communication device (320a; 320b; 420) for increasing a signal strength of a radio signal transmitted by the communication device (320a; 320b; 420) to user equipment (310a; 310b; 410), comprising:
receiving (210) a communication zone message comprising information about an attenuation characteristic of a line-of-sight communication channel (330a; 330b; 430) between the communication device (320a; 320b; 420) and the user equipment (310a; 310b; 410); and
adjusting (120) an antenna radiation pattern (D₁; D₂) of the communication device (320a; 320b; 420) based on the attenuation characteristic of the line-of-sight communication channel (330a; 330b) for increasing the signal strength.

13. An apparatus (30), comprising:
one or more interfaces (32) configured to communicate with a communication device (320a; 320b; 420) or user equipment (310a; 310b; 410); and
processing circuitry (34) configured to control the one or more interfaces (32) and to: perform the method according to any of claims 1 - 12.

14. A vehicle (410; 420) comprising the apparatus (30) according to claim 13.

15. A computer program having a program code for performing the method (100; 200) according to any one of claims 1 - 12, when the computer program is executed on a computer, a processor, or a programmable hardware component.

## Amended claims

### Amended claims in accordance with Rule 137(2) EPC.

1. A method (100) for user equipment (310a; 310b; 410) for increasing a signal strength of line-of-sight communication of a radio signal from the user equipment (310a; 310b; 410) at a receiving communication device (320a; 320b), comprising:
determining (110) an attenuation characteristic of a line-of-sight communication channel (330a; 330b; 430) between the user equipment (310a; 310b; 410) and the receiving communication device (320a; 320b; 420) based on at least one of an obstacle inside the line-of-sight communication channel or an obstacle in the surrounding of the line-of-sight communication channel; and
adjusting (120) an antenna radiation pattern (D₁; D₂) of the user equipment (310a; 310b; 410) based on the attenuation characteristic of the line-of-sight communication channel (330a; 330b) for increasing the signal strength of line-of-sight communication.

2. The method (100) according to the claim 1, further comprising:
obtaining information about an environment of the user equipment (310a; 310b; 410);
determining an environmental model; and
wherein determining the attenuation characteristic of the line-of-sight communication channel (330a; 330b; 430) is further based on the environmental model.

3. The method (100) according to the claim 2, wherein
the information about the environment comprises dynamic information; and
wherein the environmental model is a predicted environmental model.

4. The method (100) according to any of the preceding claims, wherein
adjusting of the antenna radiation pattern (D₁; D₂) comprises adjusting an angle of departure of a beam of the antenna radiation pattern (D₁; D₂).

5. The method (100) according to any of the preceding claims, wherein
adjusting of the antenna radiation pattern (D₁; D₂) comprises adjusting a beam width of a beam of the antenna radiation pattern (D₁; D₂).

6. The method (100) according to any of the claims 2 - 5, further comprising determining a radiopaque area of the line-of-sight communication channel (330a; 330b; 430) based on the environmental model; and
if the radiopaque area exceeds a threshold adjusting the antenna radiation pattern (D₁; D₂) to increase the signal strength of the radio signal at the receiving communication device (320a; 320b; 420) based on the radiopaque area or terminating a transmission of the radio signal.

7. The method (100) according to any of the claims 3 - 6, further comprising determining a usage time for the antenna radiation pattern (D₁; D₂) based on the predicted environmental model.

8. The method (100) according to any of the claims 3 - 7, wherein
the dynamic information is information about a movement speed of the user equipment (310a; 310b; 410), an obstacle (340; 350; 450) in the environment and/or the communication device (320a; 320b; 420).

9. The method (100) according to any of the claims 3 - 8, wherein
the dynamic information is information about a planned route of the user equipment (310a; 310b; 410), an obstacle (340; 350; 450) in the environment and/or the communication device (320a; 320b; 420).

10. The method (100) according to any of the preceding claims, further comprising adjusting a transmission parameter based on the adjusted antenna radiation pattern (D₁; D2).

11. The method (100) according to any of the preceding claims, further comprising generating a communication zone message comprising information about the attenuation characteristic of the line-of-sight communication channel (330a; 330b; 430); and transmitting the communication zone message to the communication device (320a; 320b; 420).

12. A method (200) for a communication device (320a; 320b; 420) for increasing a signal strength of line-of-sight communication of a radio signal transmitted by the communication device (320a; 320b; 420) to user equipment (310a; 310b; 410), comprising:
receiving (210) a communication zone message comprising information about an attenuation characteristic of a line-of-sight communication channel (330a; 330b; 430) between the communication device (320a; 320b; 420) and the user equipment (310a; 310b; 410);
and
adjusting (120) an antenna radiation pattern (D₁; D₂) of the communication device (320a; 320b; 420) based on the attenuation characteristic of the line-of-sight communication channel (330a; 330b) for increasing the signal strength of line-of-sight communication.

13. An apparatus (30), comprising:
one or more interfaces (32) configured to communicate with a communication device (320a; 320b; 420) or user equipment (310a; 310b; 410); and
processing circuitry (34) configured to control the one or more interfaces (32) and to:
perform the method according to any of claims 1 - 12.

14. A vehicle (410; 420) comprising the apparatus (30) according to claim 13.

15. A computer program having a program code for performing the method (100; 200) according to any one of claims 1 - 12, when the computer program is executed on a computer, a processor, or a programmable hardware component.
